# EUROPEAN PATENT APPLICATION

(11) **EP 0 963 053 A2**
(43) Date of publication of application: **08.12.1999**
(21) Application number: 99304070.8
(22) Date of filing: 26.05.1999
(51) Int. Cl.: H04B 1/40

(54) **Bidirectional filter for half duplex single sideband transceiver and method of operation thereof**

(30) Priority: 02.06.1998 US 89206
(71) Applicant: LUCENT TECHNOLOGIES INC., Murray Hill, New Jersey 07974-0636 (US)
(72) Inventor: Koullias, Iconomos A., Reading, Pennsylvania 19608 (US); Nelson, Dale Harvey, Shillington, Pennsylvania 19607 (US)
(74) Representative: Johnston, Kenneth Graham

(57) **Abstract**

For use with a transceiver operable in a half duplex mode and having separate receive and transmit signal paths between a baseband circuit and an antenna thereof, a bidirectional filter, a method of operating the same and a single sideband transceiver incorporating the filter or the method. In one embodiment, the filter includes: (1) an intermediate filter stage and (2) switching circuitry, associated with the intermediate filter stage, that places the intermediate filter stage in only a selected one of the receive and transmit signal paths as a function of an operating mode of the baseband circuit.

## Description

### Technical Field of the Invention

The present invention is directed, in general, to wireless telecommunications and, more specifically, to a bidirectional filter for half duplex single sideband transceiver and method of operation thereof.

### Background of the Invention

Cordless telephones consisting of a handset and a base that communicate via a radio link are widely used today. The cordless phone's popularity stems chiefly from the user's ability to roam freely about the home or office while using the cordless phone. When first introduced, the base and the handset communicated using relatively simple transceivers that transmitted and received analog RF signals. These transceivers operated in a limited number of channels in the frequency band between 46 MHz and 49 MHz.

More recently, digital cordless telephones have been introduced that transmit and receive RF signals in the 900-928 MHz frequency band (hereafter, the "900 MHz band"). These signals may be analog or digital. The higher frequency range and the use of spread spectrum techniques enable digital cordless telephones to transmit a clearer signal over greater distances than the older analog cordless telephones. The quality of the signal is further enhanced by the use of a digital pulse train, rather than an analog signal.

Spread spectrum techniques spread information content over a wider bandwidth than the frequency content of the original information and provide a relatively secure form of information transmission. RF transceivers employing spread spectrum techniques are well-known and widely used. Although the applications in which spread spectrum transceivers are used are too numerous to describe in detail, increasingly popular applications are in the fields of wireless telephony and wireless computer systems.

Baseband modulation techniques are typically used with digital cordless phones operating in the 900 MHZ band. A baseband modulation system allows an information signal to use the entire available bandwidth of the transmission medium as compared to a broadband modulation system which divides the transmission medium into frequency bands or channels. Baseband systems may employ time-division multiplexing of information signals where broadband systems would use frequency-division multiplexing.

Baseband modulation techniques are particularly attractive for use in digital transmission applications where the information modulation signal is contained in only two states. A primary advantage of baseband techniques is simplicity, since a baseband system may accept digital signals directly and requires no tuned circuits or radio frequency apparatus itself in order to operate correctly. This simplicity typically results in lower overall cost, when compared to other techniques, which is of increasing important in digital cordless telephone applications.

Many digital cordless telephone handsets use conventional RF transceivers which employ separate signal paths for the transmitter and the receiver. In this system, the transmit and receive functions are not simultaneous in the handset or in the base. The voice data is sent in digital form, with sufficient data rate increase and buffering, to achieve a full-duplex function of the voice signals in a half-duplex system. Although the transmitter and receiver share common antennas in both the handset and the base, each of these paths contain separate circuitry that employs some individual elements that are unique to their path and several similar filter elements that are largely duplicative. This practice increases integrated circuit chip area, overall power consumption and unit cost.

Accordingly, what is needed in the art is a way of reducing the signal processing circuitry thereby reducing both unit cost and power requirements.

### Summary of the Invention

To address the above-discussed deficiencies of the prior art, the present invention provides, for use with a transceiver operable in a half duplex mode and having separate receive and transmit signal paths between a baseband circuit and an antenna thereof, a bidirectional filter, a method of operating the same and a single sideband transceiver incorporating the filter or the method. In one embodiment, the filter includes: (1) an intermediate filter stage and (2) switching circuitry, associated with the intermediate filter stage, that places the intermediate filter stage in only a selected one of the receive and transmit signal paths as a function of an operating mode of the baseband circuit.

The present invention therefore introduces the broad concept of employing a single intermediate filter stage to provide filtering in both the receive and transmit signal paths of a transceiver operating in half duplex mode. The single intermediate filter stage replaces the separate receive and transmit intermediate filter stages of the prior art.

In one embodiment of the present invention, the switching circuitry places the intermediate filter stage alternately between an intermediate amplifier and a limiter in the receive signal path and between a modulator buffer and a transmit buffer in the transmit signal path. Depending upon the arrangement of components in the receive and transmit signal paths, the intermediate filter stage can be placed in other locations.

In one embodiment of the present invention, the intermediate filter stage is bidirectional. This allows interfaces at each end of the intermediate filter stage to act alternately as inputs or outputs, depending upon whether the intermediate filter stage is placed in the receive signal path or the transmit signal path. Of course, the intermediate filter stage can be unidirectional, in which case the switching circuitry must ensure that signals always pass through the intermediate filter stage in one direction.

In one embodiment of the present invention, a mode control circuit controls both the switching circuitry and the baseband circuit. In an embodiment to be illustrated and described, the mode control circuit (which is conventional) already provides a mode control signal to the transceiver to place it in an alternative one of receive and transmit modes. This mode control signal can drive the switching circuitry to place the intermediate filter stage in the appropriate signal path.

In one embodiment of the present invention, the switching circuit comprises first and second double-throw switches coupled to the intermediate filter stage. The double-throw switches are preferably solid state switches capable of being switched at high frequency. Double-throw ensures that the receive and transmit signal paths do not cross.

In one embodiment of the present invention, the intermediate filter stage operates at a frequency of 10.7 MHZ and the transceiver operates at a frequency of 900 MHZ. The present invention, however, is not limited to a particular frequency or range of frequencies for the intermediate filter stage or the transceiver.

In one embodiment of the present invention, the transceiver is a single sideband transceiver. Those skilled in the art will readily perceive, however, that the present invention is employable with other transceiver architectures.

The foregoing has outlined, rather broadly, preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention in its broadest form.

### Brief Description of the Drawings

For a more complete understanding of the present invention, reference is now made to the following description taken in conjunction with the accompanying drawings, in which:
FIGURE 1 illustrates a schematic diagram of a conventional transceiver operable in a half duplex mode; and
FIGURE 2 illustrates a schematic diagram showing an embodiment of the present invention for use with a transceiver operable in a half duplex mode.

### Detailed Description

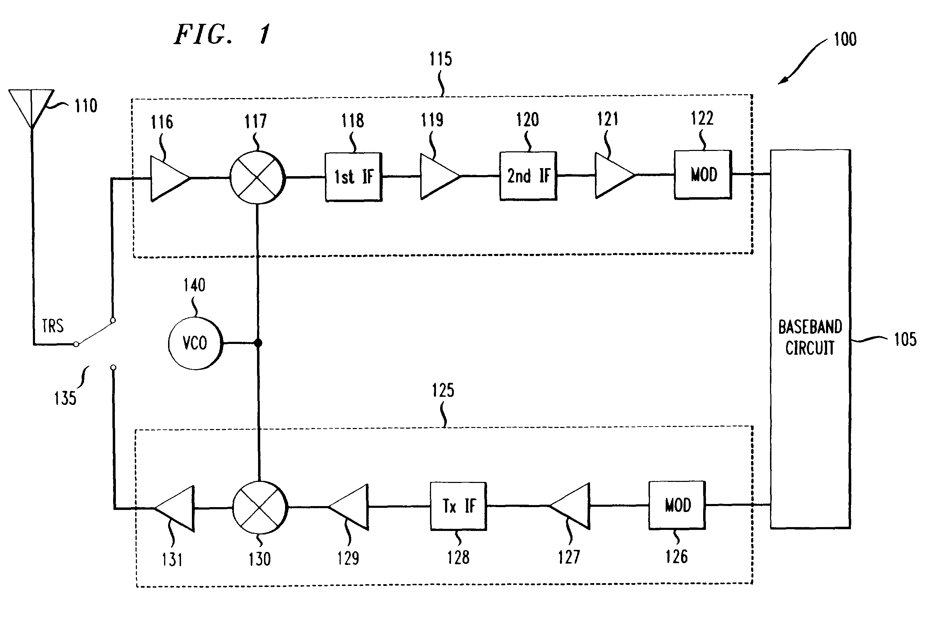

Referring initially to FIGURE 1, illustrated is a schematic diagram of a conventional transceiver 100 operable in a half duplex mode and having a receive signal path 115 and a transmit signal path 125 between a baseband circuit 105 and an antenna 110. The receive signal path 115 includes a low noise amplifier (LNA) 116, a receiver mixer circuit (RxMIXER) 117, a first intermediate frequency filter (1stIF) 118, an intermediate frequency amplifier (IFAMP) 119, a second intermediate frequency filter (2ndIF) 120, a limiter (LIMITER) 121 and a demodulator (DEMOD) 122. The transmit signal path 125 includes a modulator (MOD) 126, a modulator buffer (MODBUFFER) 127, a transmitter intermediate frequency filter (TxIF) 128, a transmitter buffer (TxBUFFER) 129, a transmitter mixer (TxMIX) 130, and a power amplifier (POWERAMP) 131. Additionally, the receive signal path 115 and the transmit signal path 125 share an antenna transmit/receive switch (TRS) 135 and a voltage-controlled oscillator (VCO) 140.

In the receiving mode, the TRS 135 is positioned to route the information-modulated carrier antenna signal to the LNA 116 which amplifies the incoming signal at the carrier frequency (e.g., the 900 MHz band) and delivers it to the RxMIXER 117. The RxMIXER 117 operates in concert with the VCO 140 to deliver a signal through the lstIF 118 at an intermediate frequency of 10.7 MHz. This signal is amplified again by the IFAMP 119 and delivered through the 2ndIF 120 and the LIMITER 121 to the DEMOD 122 which recovers the information signal. The DEMOD 122 delivers the information signal to the input of the baseband circuit 105.

In the transmitting mode, the baseband circuit 105 delivers an information signal to the MOD 126 which converts it to a modulated signal at an intermediate frequency of 10.7 MHz for amplification by the MODBUFFER 127. The modulated signal then passes through the TxIF 128 and the TXBUFFER 129 for presentation to the TXMIXER 130. The TXMIXER 130, operating in concert with the VCO 140, presents an information-modulated signal at the carrier frequency (*e.g.*, the 900 MHz band) through the POWERAMP 131 to the TRS 135. The TRS 135 is positioned to route the information-modulated carrier signal to the antenna 110 completing the process.

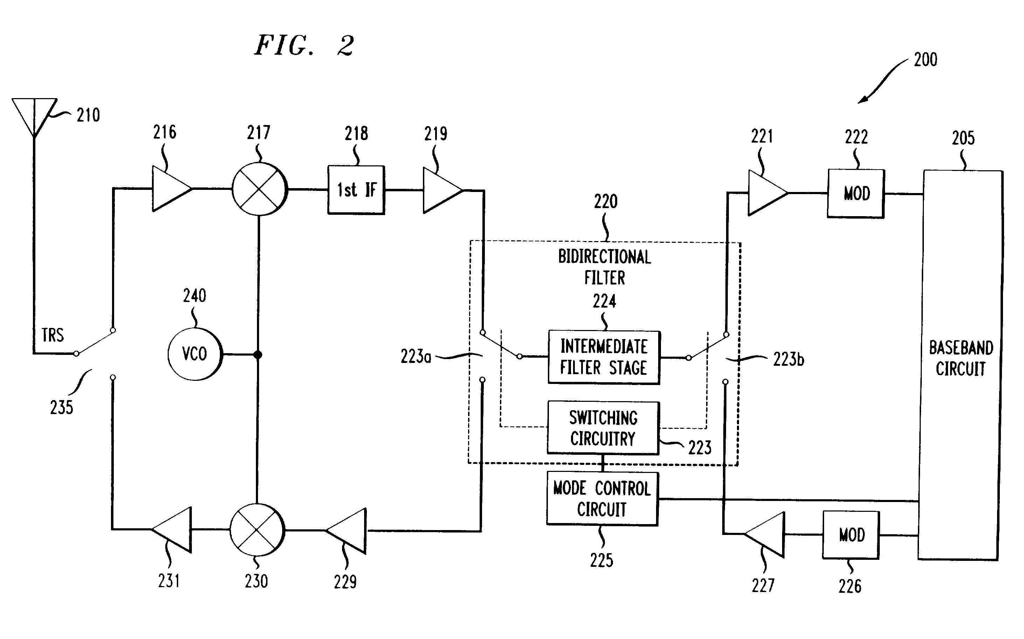

Turning now to FIGURE 2, illustrated is a schematic diagram showing an embodiment of the present invention for use with a transceiver 200 operable in a half duplex mode and having separate receive and transmit signal paths between a baseband circuit 205 and an antenna 210. The signal paths include a bidirectional filter 220, which includes switching circuitry 223 associated with an intermediate filter stage 224 of the filter 220. The transceiver 200 carries out a method of operation in which the switching circuitry 223 places the intermediate filter stage 224 in only a selected one of the receive and transmit signal paths as a function of an operating mode of the baseband circuit 205. In this embodiment of the present invention, the transceiver is a single sideband transceiver. Those skilled in the art will readily perceive, however, that the present invention is employable with other transceiver architectures.

In the receive signal path, a TRS 235 is positioned to route the information-modulated carrier antenna signal to an LNA 216 which amplifies the incoming signal at the carrier frequency (*e.g.*, 900 MHZ band) and delivers it to an RxMIXER 217. The RxMIXER 217 operates in concert with a VCO 240 to deliver a signal through a lstIF 218 at an intermediate frequency of 10.7 MHZ. This signal is amplified again by an IFAMP 219 and delivered through the bidirectional filter 220, which includes the switching circuitry 223 and the intermediate filter stage 224, and then through a LIMITER 221 to a DEMOD 222, which recovers the information signal. The DEMOD 222 delivers the information signal to the input of the baseband circuit 205.

In the transmit signal path, the baseband circuit 205 delivers an information signal to a MOD 226 which converts it to a modulated signal at an intermediate frequency of 10.7 MHZ for amplification by a MODBUFFER 227. The modulated signal then passes through the bidirectional filter 220, which includes the switching circuitry 223 and the intermediate filter stage 224, and then through a TXBUFFER 229 for presentation to a TXMIXER 230. The TXMIXER 230, operating in concert with the VCO 240, presents an information-modulated carrier frequency signal (*e.g.*, 900 MHZ band) through a POWERAMP 231 to the TRS 235. The TRS 235 is positioned to route the information-modulated carrier signal to the antenna 210 for transmission, completing the process.

The present invention therefore introduces the broad concept of employing a single intermediate filter stage to provide filtering in both the receive and transmit signal paths of a transceiver operating in half duplex mode. The single intermediate filter stage 224 replaces the separate receive and transmit intermediate filter stages (the 2ndIF 120 and the TxIF 128 of FIGURE 1, respectively) of the prior art. The switching circuitry 223 places the intermediate filter stage 224 alternately between the IFAMP (intermediate amplifier) 219 and the LIMITER 221 in the receive signal path and between the MODBUFFER (modulator buffer) 227 and the TXBUFFER (transmit buffer) 229 in the transmit signal path. Depending upon the arrangement of components in the receive and transmit signal paths, the intermediate filter stage 224 can be placed in other locations.

In this embodiment of the present invention, the intermediate filter stage 224 is itself bidirectional. This allows interfaces at each end of the intermediate filter stage 224 to act alternately as inputs or outputs, depending upon whether the intermediate filter stage is placed in the receive signal path or the transmit signal path. Of course, the intermediate filter stage 224 can be unidirectional, in which case the switching circuitry 223 must ensure that signals pass through the intermediate filter stage 224 in one direction.

In this embodiment, a mode control circuit 225 controls both the switching circuitry 223 and the baseband circuit 205. The mode control circuit 225 (which is conventional) already provides a mode control signal to the transceiver to place the transceiver in an alternative one of receive and transmit modes. This mode control signal can be employed additionally to drive the switching circuitry 223 to place the intermediate filter stage 224 in the appropriate signal path.

The switching circuitry 223 is illustrated as comprising first and second double-throw switches 223a, 223b coupled to the intermediate filter stage 224, as shown. The double-throw switches 223a, 223b are preferably solid state switches capable of being switched at high frequency. Double-throw ensures that the receive and transmit signal paths do not cross. The intermediate filter stage 224 operates at a frequency of 10.7 MHz and the transceiver operates at a frequency of 900 MHz. The present invention, however, is not limited to a particular frequency or range of frequencies for the intermediate filter stage 224 of the transceiver.

Although the present invention has been described in detail, those skilled in the art should understand that they can make various changes, substitutions and alterations herein without departing from the spirit and scope of the invention in its broadest form.

## Claims

1. For use with a transceiver operable in a half duplex mode and having separate receive and transmit signal paths between a baseband circuit and an antenna thereof, a bidirectional filter comprising:
an intermediate filter stage; and
switching circuitry, associated with said intermediate filter stage, that places said intermediate filter stage in only a selected one of said receive and transmit signal paths as a function of an operating mode of said baseband circuit.

2. For use with a transceiver operable in a half duplex mode and having separate receive and transmit signal paths between a baseband circuit and an antenna thereof, a method of filtering signals traveling in said receive and transmit signal paths, comprising the steps of:
providing an intermediate filter stage; and
placing said intermediate filter stage in only a selected one of said receive and transmit signal paths as a function of an operating mode of said baseband circuit.

3. A single sideband transceiver operable in a half duplex mode and comprising:
a baseband circuit;
an antenna;
separate receive and transmit signal paths between said baseband circuit and said antenna; and
a bidirectional filter, including:
an intermediate filter stage, and
switching circuitry, associated with said intermediate filter stage, that places said intermediate filter stage in only a selected one of said receive and transmit signal paths as a function of an operating mode of said baseband circuit.

4. The filter of claim 1, the method of claim 2, or the transceiver of claim 3, wherein switching circuitry places said intermediate filter stage alternately between an intermediate amplifier and a limiter in said receive signal path and between a modulator buffer and a transmit buffer in said transmit signal path.

5. The filter of claim 1, the method of claim 2, or the transceiver of claim 3, wherein said intermediate filter stage is bidirectional.

6. The filter of claim 1 or the transceiver of claim 3, wherein a mode control circuit controls both said switching circuitry and said baseband circuit.

7. The filter of claim 1, the method of claim 2, or the transceiver of claim 3, wherein said switching circuit comprises first and second double-throw switches coupled to said intermediate filter stage.

8. The filter of claim 1, the method of claim 2, or the transceiver of claim 3, wherein said intermediate filter stage operates at a frequency 10.7 MHz.

9. The filter of claim 1, or the transceiver of claim 3, wherein said transceiver is a single sideband transceiver.

10. The method as recited in claim 2, further comprising the step of controlling both said switching circuitry and said baseband circuit with a mode control circuit.

11. The transceiver of claim 3, wherein said transceiver operates at a frequency of substantially 900 MHz.
